# EUROPÄISCHE PATENTANMELDUNG

(11) **EP 0 987 871 A2**
(43) Veröffentlichungstag der Anmeldung: **22.03.2000**
(21) Anmeldenummer: 99115125.9
(22) Anmeldetag: 10.08.1999
(51) Int. Cl.: H04M 11/02

(54) **Schaltungsvorrichtung zum gesteuerten Verbinden eines Fernsprachapparates mit einer Türfreisprecheinrichtung**

(30) Priorität: 16.09.1998 DE 19842326
(71) Anmelder: Deutsche Telekom AG, 53113 Bonn (DE)
(72) Erfinder: Dihlmann, Klaus Dieter, 64839 Münster-Altheim (DE); Hellenthal, H. Georg, 51105 Köln (DE)

(57) **Zusammenfassung**

Bisher ist es bekannt, Standardtelefone über eine TK-Anlage an eine Türfreisprecheinrichtung und das Fernsprechnetz anzuschalten. Da TK-Anlagen teuer sind, besteht ein Bedarf daran, Fernsprechapparate ohne Zwischenschaltung von TK-Anlagen mit einer Türfreisprecheinrichtung zu verbinden.

Dazu wird eine Schaltungsvorrichtung (10) vorgeschlagen, die eine erste Schnittstelle (40) zum Anschalten der Vorrichtung (10) an eine Telekommunikations-Anschlußeinheit (50), wenigstens eine zweite Schnittstelle (60) zum Anschalten eines Fernsprechapparates (20) sowie eine dritte Schnittstelle (70) zum Anschalten der Vorrichtung (10) an die Türfreisprecheinrichtung (30) aufweist. Darüber hinaus ist der ersten Schnittstelle (40) ein Rufdetektor (90) und der dritten Schnittstelle (70) ein Detektor (90) zugeordnet, der die Betätigung einer vorbestimmten Klingeltaste der Türfreisprecheinrichtung erfassen kann. Eine Steuereinrichtung (110) verbindet unter Ansprechen auf den Detektor (90) den Fernsprechapparat (20) über eine Schalteinrichtung (100) mit der dritten Schnittstelle (70). Ein programmierbarer Ruftongenerator (120) erzeugt ein Rufsignal, wenn der Detektor (90) die Betätigung einer vorbestimmten Klingeltaste erfaßt.

## Beschreibung

Die Erfindung betrifft eine Schaltungsvorrichtung zum gesteuerten Verbinden wenigstens eines Fernsprechapparates mit einer Türfreisprecheinrichtung.

Aus dem Bereich der Türfreisprechanlagen ist bekannt, daß an TK-Anlagen über eine spezielle Schnittstelle eine oder mehrere Türfreisprecheinrichtungen angeschaltet und betrieben werden können. Die Kommunikation sowie die Signalisierung und funktionale Steuerung erfolgt ausschließlich über an die TK-Anlage angeschlossene Standardtelefone, die auch zum herkömmlichen Telefonieren über die TK-Anlage verwendet werden können. Eine solche Türfreisprechanlage ist beispielsweise aus der DE-PS-19 534 539 bekannt.

Bisher ist es jedoch nicht möglich, mittels eines Fernsprechapparates, der an einer analogen oder digitalen Teilnehmerschaltung einer Vermittlungsstelle eines Netzbetreibers betrieben wird, ohne Einbeziehung einer TK-Anlage eine Verbindung mit einer Türfreisprecheinrichtung herzustellen, Türen zu öffnen, oder andere Schalt- und/oder Steuerfunktionen einzuleiten. Insbesondere bei kleineren Wohneinheiten, bei welchen sich der Einsatz von TK-Anlagen nicht lohnt, besteht daher ein Bedarf, Standardtelefone ohne Zwischenschaltung einer kostenaufwendigen TK-Anlage mit einer Türfreisprecheinrichtung zu verbinden.

Der Erfindung liegt daher die Aufgabe zugrunde, eine Schaltungsvorrichtung zu schaffen, die es ermöglicht, an sich bekannte Fernsprechapparate mit einer Türfreisprecheinrichtung zu verbinden.

Dieses technische Problem löst die Erfindung mit den Merkmalen des Anspruchs 1.

Dazu weist die Schaltungsvorrichtung eine erste Schnittstelle zum Anschalten der Vorrichtung an eine Teilnehmeranschlußleitung abschließende Telekommunikations-Anschlußeinheit auf. Ferner ist wenigstens eine zweite Schnittsttelle zum Anschalten eines Fernsprechapparates sowie eine dritte Schnittstelle zum Anschalten der Vorrichtung an die Türfreisprecheinrichtung vorgesehen. Um einen externen Verbindungswunsch über ein Fernsprechnetz erkennen zu können, ist der ersten Schnittstelle ein Rufdetektor zugeordnet. Um die Betätigung einer vorbestimmten Klingeltaste der Türfreisprecheinrichtung erfassen zu können, ist der dritten Schnittstelle ein Detektor zurordnet, bei dem es sich um einen Wahldetektor zum Erkennen von Mehrfrequenzsignalen handeln kann, die den jeweiligen Klingeltasten zugewiesen sind. Darüber hinaus weist die Schaltungsvorrichtung eine Schalteinrichtung, beispielsweise in Form eines Koppelfeldes auf, über das eine Steuereinrichtung unter Ansprechen auf den Detektor den Fernsprechapparat mit der dritten Schnittstelle und damit mit der Türfreisprecheinrichtung verbindet. Um die Betätigung einer vorbestimmten Klingeltaste einem Benutzer des Fernsprechappartes signalisieren zu können, ist ein programmierbarer Ruftongenerator zum Erzeugen eines Rufsignales vorgesehen. Dieses Rufsignal kann beispielsweise zum Fernsprechapparat und dort über den integrierten Lautsprecher oder über einen internen Signalgeber der Schaltungsvorrichtung ausgegeben werden.

Vorteilhafte Weiterbildungen sind Gegenstand der Unteransprüche.

Um eine bestehende Verbindung zu einem Fernsprechteilnehmer oder zur Türfreisprecheinrichtung erkennen und einen weiteren Verbindungswunsch signalisieren zu können, weist die Schaltungsvorrichtung einen Schleifenstromdetektor sowie eine Einrichtung zum Signalisieren eines Verbindungswunsches an den Fernsprechapparat bei einer bereits bestehenden Verbindung auf. Ferner kann eine Halteeinrichtung zum Halten einer dieser Verbindungen vorgesehen sein.

Die Stromversorgung der Komponenten der Schaltungsvorrichtung und des Fernsprechapparates erfolgt über eine Stromversorgungseinrichtung, die beispielsweise mit der Netzspannung gespeist wird. Die Stromversorgungseinrichtung sorgt ferner für die entsprechende Speisung der angeschalteten Türfreisprecheinrichtung. Dazu ist eine erste Gleichstromquelle zum Bereitstellen eines Ruhegleichstromes für die Türfreisprecheinrichtung, eine zweite Gleichstromquelle zum Bereitstellen eines Betriebsgleichstromes für die Türfreisprecheinrichtung sowie eine Wechselstromquelle zum Bereitstellen eines Wechselstromes für einen Türöffner der Türfeisprecheinrichtung vorgesehen, die allesamt an sich bekannt sind.

Um vom Fernsprechapparat, der vorzugsweise einen DTMF-Sender (DTMF von Dual Tone Multiple Frequency) aufweist, kommende Steuerbefehle verarbeiten zu können, ist ein Mehrfrequenzton-Detektor vorgesehen.

Wenigstens eine vierte Schnittstelle dient zum gesteuerten Anschalten eines externen Signalgebers, beispilesweise eines Türgongs.

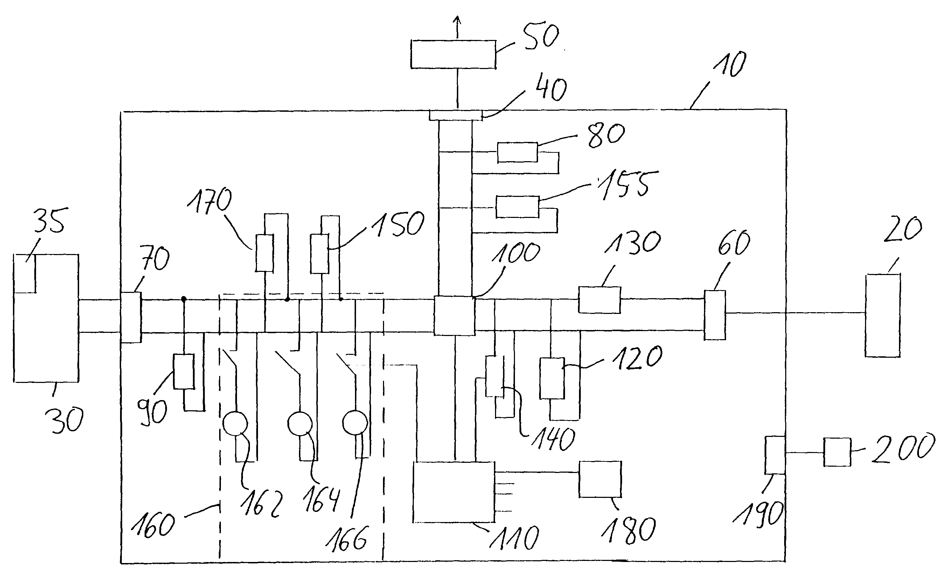

Die Erfindung wird nachfolgend anhand eines Ausführungsbeispieles in Verbindung mit der beiliegenden Zeichnung näher erläutert.

Obwohl die erfindungsgemäße Schaltungsvorrichtung sowohl bei digitalen als auch bei analogen Fernsprechapparaten eingesetzt werden kann, wird die Erfindung nachfolgend anhand eines analogen Systems beschrieben.

Die Figur zeigt ein Schaltungsmodul 10 mit einer analogen Schnittstelle 40, über die das Schaltungsmodul 10 mittels einer Anschlußschnur, die beispielsweise einen TAE-Stecker besitzt, mit einer TAE-Anschlußdose 50 verbunden ist. Der Schnittstelle 40 ist ein Rufdetektor 80 sowie eine Halteeinrichtung 155 zugeordnet, deren Funktionsweise an sich bekannt ist. Sowohl der Rufdetektor 80 als auch die Halteeinrichtung 155 sind mit einer Steuereinrichtung 110 verbunden. Im Normalzustand des Schaltungsmodules 10 ist die Schnittstelle 40 mit einer Schnittstelle 60 verbunden, bei der es sich beispielsweise um eine NFN-codierte TAE-Anschlußeinheit handeln kann. In die F-codierte Buchse der Schnittstelle 60 ist die Anschlußschnur eines Fernsprechapparats 20 gesteckt, der über einen DTMF-Sender verfügt. Der TAE-Anschlußeinheit 60 ist ein Schleifenstromdetektor 130, eine Einrichtung 140 zum Signalisieren eines Verbindungswunsches an den Fernsprechapparat 20 sowie ein programmierbarer Ruftongenerator 120 zum Erzeugen eines wählbaren Rufsignales zugeordnet. Der Ruftongenerator 120 und die Einrichtung 140 zum Signalisieren eines Verbindungswunsches, die ein sogenanntes Anklopfsignal erzeugt, können Bestandteil einer Teilnehmerschaltung sein, die aus Vermittlungsstellen bereits bekannt ist. Die Anklopfeinrichtung 140 und der Ruftongenerator 120 sind zweckmäßigerweise mit der Steuereinrichtung 110 verbunden. Der Ruftongenerator 120 ist derart ausgebildet, daß er entweder das Rufsignal zum Fernsprechapparat 20 und/oder alternativ zu einem internen Signalgeber abgibt.

Das Schaltungsmodul 10 weist ferner eine weitere Schnittstelle 190 auf, an die beispielsweise ein externer Türgong 200 angeschaltet ist, der über nicht dargestellte Schaltelemente durch die Steuereinrichtung 110 aktiviert wird. Ferner weist das Schaltungsmodul 10 eine weitere Schnittstelle 70 auf, an die eine herkömmliche Türfreisprecheinrichtung 30 angeschaltet werden kann. Wie die Figur zeigt,handelt es sich bei der Türfreisprecheinrichtung 30 um eine 2-Draht-Einrichtung, obwohl auch eine 4-Draht-Einrichtung verwendet werden kann. In diesem Fall ist zwischen die Türfreisprecheinrichtung 30 und den Schaltungsmodul 10 ein aus der DE-PS 195 34 539 bekanntes Anpaasungsmodul zu schalten. Der Schnittstelle 70 ist ein Wahldetektor 90, beispielsweise ein DTMF-Detektor zugeordnet, der die von der Türfreisprecheinrichtung 30 bei Betätigung einer vorbestimmten Klingeltaste des Klingeltastenfelds 35 gelieferten DTMF-Signale auswerten kann. Ferner ist eine Stromversorgungseinrichtung 160 vorgesehen, die eine Gleichstromquelle 162 zum Bereitstellen eines Ruhegleichstromes von beispielsweise 30 mA, eine Gleichstromquelle 164 zum Bereitstellen eines Betriebsgleichstromes beispielsweise von 80 mA für die Türfreisprecheinrichtugn 30 sowie eine Wechselstromquelle 166 zum Bereitstellen eines Wechselstromes beispielsweise von 2 A für einen nicht dargestellten Türöffner der Türfreisprecheinrichtung 30 aufweist. Die Stromversorgungseinrichtung 160 speist ferner alle Bauteile des Schaltungsmodules 10 sowie den Fernsprechapparat 20. Die Schnittstellen 70, 40 und 60 sind über eine Schalteinrichtung 100, beispielsweise in Form eines Koppelfeldes, welches durch die Steuereinrichtung 110 steuerbar ist, verbunden. Der Schnittstelle 70 ist ferner ein DTMF-Detektor 170 zum Auswerten der vom Fernsprechapparat 20 gelieferten Steuersignale vorgesehen. Ferner ist eine Halteeinrichtung 150 implementiert, die im Bedarfsfall die Verbindung zur Türfreisprecheinrichtung 30 halten kann.

Nachfolgend wird die Funktionsweise des Schaltungsmodules 10 näher beschrieben. Zunächst sei angenommen, daß sich das gesamte Systeme im Ruhezustand befindet. Dies bedeutet, daß über die Gleichstromquelle 162 lediglich ein Ruhestrom der Türfreisprecheinrichtung 30 zugeführt wird, um diese im Bereitschaftszustand zu halten. Nunmehr sei angenommen, daß eine Klingeltaste am Klingeltastenfeld 35 betätigt wird, woraufhin das der Klingeltaste zugeordnete DTMF-Signal an die Schnittstelle 70 angelegt wird. Dieses DTMF-Signal erkennt der Wahldetektor 90 als Betätigung der vorbestimmten Klingeltaste und signalisiert diesen Zustand der Steuereinrichtung 110, die daraufhin den Rufsignalgenerator 120 veranlaßt, eine Rufwechselspannung über die Schnittstelle 60 zum Fernsprechapparat 20 zu übertragen. Der Rufsignalgenerator 120 sei derart programmiert, daß er eine Rufsignal an den Fernsprechapparat 20 liefert, das eindeutig das Betätigen einer Klingeltaste signalisiert. Beim Abheben des Hörers am Fernsprechapparat 20 sorgt die Steuereinrichtung 110 dafür, daß die Betriebsgleichstromquelle 164 mit der Türfreisprecheinrichtung verbunden wird. Ferner schaltet die Steuereinrichtung 110 das Koppelfeld 100 derart, daß die Schnittstelle 70 mit der Schnittstelle 60 verbunden ist, so daß nach dem Abheben des Hörers an dem Fernsprechapparat 20 dieser mit der Türfreisprecheinrichtung 30 verbunden ist. Jetzt kann eine Kommunikation zwischen der Türfreisprecheinrichtung 30 und dem Fernsprechapparat 20 stattfinden. Damit die Türfreisprecheinrichtung 30 den Ruhezustand, Betriebszustand oder die Betätigung eines Türöffners erkennen kann, weist sie in an sich bekannter Weise einen Stromstärke- und Stromart-Detektor auf. Wenn der Benutzer des Fernsprechapparates 20 nunmehr einen Besucher hereinlassen möchte, betätigt er eine vorbestimmte Taste an seinem Fernsprechapparat 20, woraufhin ein vorbestimmtes DTMF-Signal dem DTMF-Detektor 170 zugeführt wird, der den ausgewerteten Zustand der Steuereinrichtung 110 weiterleitet. Die Steuereinrichtung 110 trennt daraufhin die Betriebsgleichstromquelle 164 vorübergehend von der Türfreisprecheinrichtung 30 und schaltet für eine vorbestimmte Zeit die Wechselstromquelle 166 an die Türfreisprecheinrichtung 30, die den gelieferten Wechselstrom zum Türöffner weiterleitet. Nach Ablauf der programmierbaren Zeitspanne wird die Wechselstromquelle 166 wieder von der Türfreisprecheinrichtung 30 getrennt und die Betriebsgleichstromquelle 164 angeschaltet. Jetzt kann die Kommunikation zwischen dem Fernsprechapparat 20 und der Türfreisprecheinrichtung 30 wieder fortgesetzt werden.

Als weiteres Szenario sei angenommen, daß während einer Gesprächsverbindung zwischen dem Fernsprechapparat 20 und der Türfreisprecheinrichtung 30 ein dritter Teilnehmer über das Fernsprechnetz eine Verbindung zum Fernsprechapparat 20 aufbauen möchte. In diesem Fall legt die der Teilnehmeranschlußdose 50 zugeordnete Vermittlungsstelle ein Rufsignal an, welches von der Ruferkennung 80 erkannt wird. Da die Steuereinrichtung 110 vorher über den Schleifenstromdetektor 130 unterrichtet worden ist, daß bereits eine Verbindung zum Fernsprechapparat 20 besteht, aktiviert die Steuereinrichtung 110 unter Ansprechen auf die Ruferkennung 80 die Anklopfeinrichtung 140, ein Anklopfsignal zum Fernsprechapparat 20 zu übertragen, das einen weiteren Verbindungswunsch signalisiert. Daraufhin betätigt der Benutzer des Fernsprechapparates 20 eine vorbestimmte Taste, die das Halten der Verbindung zur Türfreisprecheinrichtung 30 in der Halteeinrichtung 150 bewirken kann. Gleichzeitig schaltet die Steuereinrichtung 110 das Koppelfeld 100 derart, daß nunmehr der Fernsprechapparat 20 mit der Schnittstelle 40 und somit über die TAE-Dose 50 mit dem dritten Teilnehmer des Fernsprechnetzes, nachfolgend kurz Fernsprechteilnehmer genannt, verbunden ist. Ein ähnliches Prozedere läuft ab, wenn der Fernsprechapparat 20 zunächts mit einem Fernsprechteilnehmer verbunden ist und während der bestehenden Verbindung die Klingeltaste der Türfreisprecheinrichtung 30 betätigt wird.

Das Schaltmodul 10 ist derart implementiert, daß der Fernsprechapparat 20 auch wahlweise zwischen dem Fernsprechteilnehmer und der Türfreisprecheinrichtung 30 verbunden werden kann. Nach dem Auslösen der Verbindung zum Fernsprechteilnehmer oder zur Türfreisprecheinrichtung 30 wird der Fernsprechapparat 20 automatisch über das Koppelfeld 100 wieder mit der Türfreisprecheinrichtung 30 bzw. dem Fernsprechteilnehmer verbunden. Nach dem Trennen der Verbindung zwischen dem Fernsprechapparat 20 und der Türfreisprecheinrichtung 30, welches vom Schleifenstromdetektor 130 erkannt wird, sorgt die Steuereinrichtung 110 dafür, daß die Ruhegleichstromquelle 162 wieder mit der Türfreisprecheinrichtung 30 verbunden wird.

Das Schaltungsmodul 10 ist ferner dazu ausgebildet, das Betätigen der Klingeltaste über die Schnittstelle 190 an den daran angeschlossenen Türgong 200 zu signalisieren.

Die Steuereinrichtung 110 ist ferner derart programmiert, daß sie bei einer bestehenden Verbindung zwischen dem Fernsprechapparat 20 und der Türfreisprecheinrichtung 30 eine Verbindung die Schnittstelle 40 zu einem Fernsprechteilnehmer aufbauen kann, während die Verbindung zur Türfreisprecheinrichtung 30 gehalten wird. Bei Betätigung einer entsprechenden Taste am Fernsprechapparat 20 wird hierzu ein entsprechendes DTMF-Signal vom DTMF-Detektor 170 ausgewertet und das Auswertesignal der Steuereinrichtung 110 zugeführt. Die Steuereinrichtung 110 sorgt dafür, daß über die Halteeinrichtung 150 die Verbindung zur Türfreisprecheinrichtung 30 gehalten wird und das Koppelfeld 100 die Schnittstelle 60 mit der Schnittstelle 40 verbindet, so daß der Fernsprechapparat 20 eine normale Wählverbindung zu einem gewünschten Fernsprechteilnehmer einleiten kann.

Dank der Erfindung ist es möglich, einen gewöhnlichen Fernsprechapparat, der an einer Telekommunikations-Aanschlußeinheit anschaltbar ist, an einer an sich bekannten Türfreisprecheinrichtung zu betreiben, ohne daß hierzu eine TK-Anlage notwendig ist.

### Bezugszeichenliste

- 10: Schaltungsmodul
- 20: Fernsprechapparat
- 30: Türfreisprecheinrichtung
- 35: Klingeltastenfeld
- 40: Schnittstelle zum Verbinden mit einer TAE-Dose
- 50: TAE-Dose
- 60: NFN-codierte TAE-Anschlußeinheit
- 70: Türfreisprecheinrichtungs-Schnittstelle
- 80: Rufdetektor
- 90: Wahldetektor
- 100: Koppelfeld
- 110: Steuereinrichtung
- 120: Ruftongenerator
- 130: Schleifenstromdetektor
- 140: Anklopfen-Signalisierungseinrichtung
- 150: Halteeinrichtung
- 155: Halteeinrichtung
- 160: Stromversorgungseinrichtung
- 162: Ruhegleichstromquelle
- 164: Betriebsgleichstromquelle
- 166: Wechselstromquelle
- 170: DTMF-Detektor
- 180: interner Signalgeber
- 190: Schnittstelle für externe Signalgeber
- 200: Türgong

## Patentansprüche

1. Schaltungsvorrichtung zum gesteuerten Verbinden wenigstens eines Fernsprechapparates (20) mit einer Türfreisprecheinrichtung (30) mit folgenden Merkmalen:
- eine erste Schnittstelle (40) zum Anschalten der Vorrichtung (10) an eine, eine Teilnehmeranschlußleitung abschließende Telekommunikations-Anschlußeinheit (50),
- wenigstens eine zweite Schnittstelle (60) zum Anschalten eines Fernsprechappartes (20),
- eine dritte Schnittstelle (70) zum Anschalten der Vorrichtung (10) an die Türfreisprecheinrichtung (30),
- ein der ersten Schnittstelle (40) zugeordneter Rufdetektor (90),
- ein der dritten Schnittstelle (70) zugeordneten Detektor (90) zum Erfassen der Betätigung einer vorbestimmten Klingeltaste der Türfreisprecheinrichtung (30),
- eine Schalteinrichtung (100),
- eine Steuereinrichtung (110), die unter Ansprechen auf den Detektor (90) den Fernsprechapparat (20) über die Schalteinrichtung (100) mit der dritten Schnittstelle (7) verbindet, und
- ein programmierbarer Ruftongenerator (120) zum Erzeugen eines vorbestimmten Rufsignals, wenn der Detektor (90) die Betätigung einer vorbestimmten Klingeltaste erfasst.

2. Schaltungsvorrichtung nach Anspruch 1,
gekennzeichnet durch einen dem Fernsprechapparat (20) zugeordneten Schleifenstromdetektor (130).

3. Schaltungsvorrichtung nach Anspruch 2,
gekennzeichnet durch
- eine Einrichtung (14) zum Signalisieren eines Verbindungswunsches an den Fernsprechapparat (20) bei einer bereits bestehenden Verbindung und
- eine Halteeinrichtung (150, 155) zum Halten einer Verbindung.

4. Schaltungsvorrichtung nach einem der Ansprüche 1 bis 3,
gekennzeichnet durch
- eine Stromversorgungseinrichtung (160) zur Speisung der Schaltungsvorrichtung (10) und des Fernsprechapparates (20) umfassend
- eine erste Gleichstromquelle (162) zum Bereitstellen eines Ruhegleichstroms für die Türfreisprecheinrichtung (30),
- eine zweite Gleichstromquelle (164) zum Bereitstellen eines Betriebsgleichstroms für die Türfreisprecheinrichtung (30) und
- eine Wechselstromquelle (166) zum Bereitstellen eines Wechselstroms für einen Türöffner der Türfreisprecheinrichtung.

5. Schaltungsvorrichtung nach einem der Ansprüche 1 bis 4
gekennzeichnet durch einen Mehrfrequenzton-Detektor (170).

6. Schaltungsvorrichtung nach einem der Ansprüche 1 bis 5,
gekennzeichnet durch
einen internen Signalgeber (180), der bei Betätigung der vorbestimmten Klingeltaste vorübergehend ansteuerbar ist.

7. Schaltungsvorrichtung nach einem der Ansprüche 1 bis 6,
gekennzeichnet durch wenigstens eine vierte Schnittstelle (190) zum gesteuerten Anschalten eines externen Signalgebers (200).
